Europäisches Patentamt

European Patent Office

Office européen des brevets

(11) Numéro de publication: **0 009 002**
**A1**

## (12) DEMANDE DE BREVET EUROPEEN

(21) Numéro de dépôt: **79810079.8**

(22) Date de dépôt: **28.08.79**

(51) Int. Cl.³: **F 16 B 17/00**

(30) Priorité: **30.08.78 CH 9144/78**

(43) Date de publication de la demande:
**19.03.80 Bulletin 80/6**

(84) Etats Contractants Désignés:
**AT BE DE FR GB IT LU NL SE**

(71) Demandeur: **ETABLISSEMENT CONCEPTEX**

**Vaduz(LI)**

(72) Inventeur: **Bourda, Maurice**
**1, rue Henri Spiess**
**Geneve(CH)**

(74) Mandataire: **Nithardt, Roland**
**41, rue de Neuchâtel**
**CH - 1400 Yverdon(CH)**

(54) Ensemble comprenant deux longerons réunis par des traverses.

(57) Un ensemble, comprenant des longerons (1) réunis par des traverses (2), comprend des éléments de raccord (3), en vue de permettre le montage sans outil de cet ensemble. Les éléments de raccord (3) sont destinés à assurer la liaison des extrémités des traverses (2) aux longerons (1). Ces éléments de raccord (3) présentent chacun des moyens d'assemblage à guidage (4, 6, 10) et à cran de verrouillage (8, 12), coopérant suivant deux directions perpendiculaires respectivement avec l'extrémité d'une traverse (2) et un longeron (1).

EP 0 009 002 A1

./...

FIG.1

FIG.2

- 1 -

## ENSEMBLE COMPRENANT DEUX LONGERONS REUNIS PAR DES TRAVERSES

Dans différents domaines techniques, on utilise des ensembles comprenant deux longerons réunis par des traverses, chaque extrémité de traverse étant rendue solidaire d'un longeron par l'intermédiaire d'une partie de fixation. De tels ensembles sont par exemple utilisés pour former des bâtis des sommiers pour lits, etc.

L'opération de fixation des traverses aux longerons est généralement réalisée au moyen de vis et nécessite un temps non négligeable.

La présente invention a pour but de permettre un assemblage rapide des traverses aux longerons, sans qu'il soit nécessaire d'avoir recours à des outils.

L'ensemble faisant l'objet de l'invention est caractérisé en ce que la partie de fixation est solidaire d'une traverse et présente deux ailes sensiblement parallèles entre elles et transversales par rapport à l'axe longitudinal de la traverse, chaque longeron présentant des paires de glissières destinées à recevoir chacune les ailes d'une partie de fixation, les glissières de chaque paire étant disposées dans un plan parallèle à l'axe longitudinal du longeron correspondant, un cran de verrouillage étant prévu pour retenir les ailes dans leur glissière.

Le dessin annexé représente, schématiquement et à titre d'exemple, une forme d'exécution de l'ensemble faisant l'objet de l'invention.

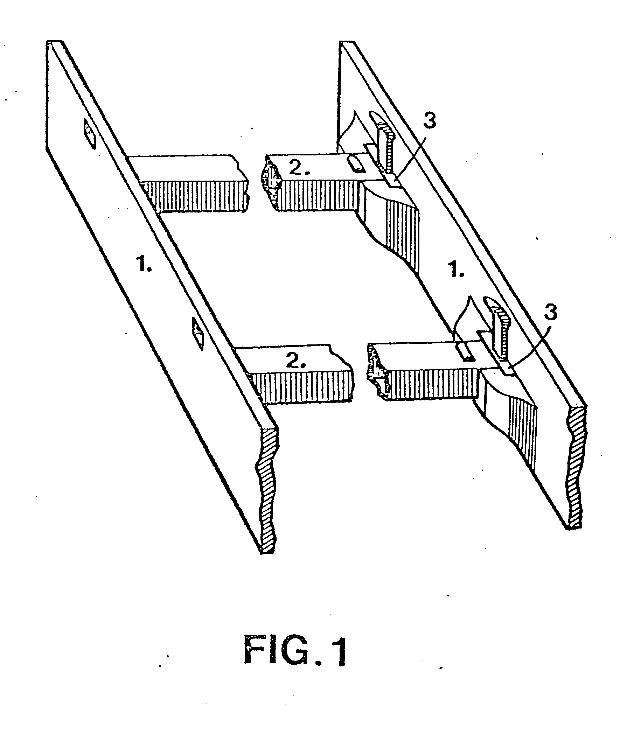

La figure 1 est une vue en perspective de cet ensemble.

Les figures 2 et 3 sont des vues de détails en perspective.

L'ensemble représenté comprend deux longerons 1 réunis par des traverses 2. Ces dernières sont constituées par des profilés tubulaires de section rectangulaire. Des éléments de raccord 3 sont montés aux extrémités de chaque traverse 2 et constituent des parties de fixation des traverses 2 aux longerons 1.

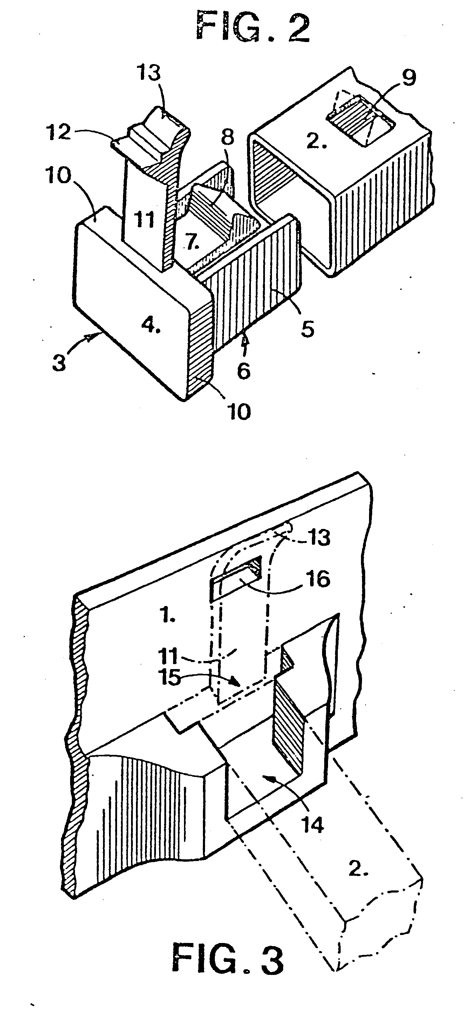

Comme illustré à la fig. 2, un élément de raccord 3 comprend une embase 4, de laquelle partent deux pattes 5 parallèles entre elles, qui forme une portée 6 destinée à être engagée dans l'extrémité d'une traverse 2.

Une languette 7 solidaire de l'embase 4 s'étend entre les deux pattes 5 et présente un cran 8 à son extrémité libre. Ce cran 8 est destiné à venir s'engager dans un trou correspondant 9, prévu dans l'une des parois de la traverse 2, afin de verrouiller l'élément de raccord 3 dans cette traverse 2.

Lorsque l'élément de raccord 3 est monté à l'extrémité d'une traverse 2, les côtés de l'embase 4 sont saillants et forment des épaulements de retenue 10. Une languette 11, solidaire de l'embase 4, s'étend dans le prolongement de cette dernière, perpendiculairement à la languette 7.

La languette 11 présente, à son extrémité libre, un cran de verrouillage 12 et une saillie 13 de déverrouillage.

Une traverse 2, munie des éléments de raccord 3, est destinée à venir s'emboîter dans des logements 14 des longerons 1. L'embase 4 de l'élément de raccord 3, formant lesdits épaulements de retenue 10, s'engage dans des glissières formées par une portion 15 élargie du logement 14. Le cran de verrouillage 12, sous l'action de l'élasticité propre de la languette 11, pénètre dans un évidement 16 du longeron 1.

On voit que l'ensemble décrit ci-dessus peut être monté ou démonté sans avoir recours à des outils et sans qu'il soit nécessaire de modifier l'écartement des longerons 1.

Pour démonter une traverse 2, il suffit de dégager, aux deux extrémités de cette traverse 2, le cran de verrouillage 12 de l'évidement 16 en agissant sur la saillie 13, et de retirer les éléments de raccord 3 des logements 14. Ces éléments de raccord 3 peuvent être démontés des traverses 2 par simple traction, après avoir repoussé le cran 8 vers l'intérieur de la traverse 2.

Les éléments de raccord 3 sont de préférence réalisés par moulage d'une
résine synthétique.

On peut prévoir de nombreuses variantes de l'ensemble faisant l'objet
de l'invention. On peut envisager toute forme d'élément de raccord 3
comprenant des moyens d'assemblage à guidage et à cran de verrouillage,
coopérant avec des moyens correspondants de l'extrémité d'une traverse 2
et d'un longeron 1. Cet élément de raccord pourrait être constitué par
un bloc présentant un trou de section correspondant à la section des
traverses 2, ce bloc étant monté et verrouillé autour de l'extrémité
d'une traverse et étant destiné à être engagé dans un logement correspondant d'un longeron 1. Au lieu d'être formées par des éléments indépendants 3, les parties de fixation pourraient être venues d'une pièce
avec les extrémités des traverses 2.

0009002

Revendications de brevet

1. Ensemble comprenant deux longerons réunis par des traverses, chaque extrémité de traverse étant rendue solidaire d'un longeron par l'intermédiaire d'une partie de fixation, caractérisé en ce que la partie de fixation est solidaire d'une traverse et présente deux ailes sensiblement parallèles entre elles et transversales par rapport à l'axe longitudinal de la traverse, chaque longeron présentant des paires de glissières destinées à recevoir chacune les ailes d'une partie de fixation, les glissières de chaque paire étant disposées dans un plan parallèle à l'axe longitudinal du longeron correspondant, un cran de verrouillage étant prévu pour retenir les ailes dans leur glissière.

2. Ensemble selon la revendication 1, caractérisé en ce que la partie de fixation est constituée par un élément indépendant, relié de façon amovible à l'extrémité de la traverse respective.

3. Ensemble selon la revendication 2, caractérisé en ce que chaque élément indépendant et chaque extrémité de traverse présentent des formes permettant leur emboîtement et des moyens à cran pour les verrouiller en position emboîtée.

4. Ensemble selon la revendication 3, dans lequel les traverses sont tubulaires de section rectangulaire, caractérisé en ce que chaque élément indépendant présente deux lames parallèles, destinées à être engagées dans l'extrémité de la traverse correspondante et à prendre appui contre deux parois opposées de l'évidement de cette traverse, ces deux lames étant venues d'une pièce avec une plaquette dont deux bords constituent lesdites ailes, cette plaquette portant encore deux languettes élastiques munies chacune d'un cran, l'une de ces languettes élastiques s'étendant dans la même direction que les lames de guidage, son cran étant destiné à s'engager dans un trou de la paroi de la traverse, l'autre languette portant un cran destiné à s'engager dans un évidement du longeron.

0009002

1/2

FIG.1

# FIG. 2

# FIG. 3

## Office européen des brevets

# RAPPORT DE RECHERCHE EUROPEENNE

| Catégorie | Citation du document avec indication, en cas de besoin, des parties pertinentes | Revendication concernée | CLASSEMENT DE LA DEMANDE (Int. Cl.³) |
|---|---|---|---|
| | **DOCUMENTS CONSIDERES COMME PERTINENTS** | | |
| | US - A - 3 429 539 (LUCIETTO et al.) <br> * fig. 7 * <br><br> -- <br><br> US - A - 3 545 712 (ELLIS) <br> * fig. 1 * <br><br> -- <br><br> DE - C - 314 634 (LIFFERT) <br> * fig. 1 * <br><br> -- <br><br> DE - U - 6 919 479 (BREMSHEY) <br> * fig. 4 * <br><br> -- <br><br> DE - U - 7 537 924 (WIELAND-WERKE) <br> * fig. 1 * <br><br> -- <br><br> FR - A - 2 175 716 (S.C.A.M.A.S.) <br> * fig. 6 * <br><br> -- <br><br> GB - A - 1 431 046 (FORMICA INT.) <br> * fig. 1 * <br><br> -- <br><br> US - A - 1 473 817 (GORSLINE) <br> * fig. 4 * <br><br> -- ./.. | 1-3 <br><br><br><br><br> 1,4 <br><br><br><br><br> 1 <br><br><br><br><br> 1 <br><br><br><br><br> 1 <br><br><br><br><br> 1 <br><br><br><br><br> 1 <br><br><br><br><br> 1 | F 16 B 17/00 <br><br><br><br><br><br><br><br> **DOMAINES TECHNIQUES RECHERCHES (Int. Cl.³)** <br><br> A 47 B 96/00 <br> E 04 H 17/00 <br> F 16 B 7/00 <br> F 16 B 9/00 <br> F 16 B 12/00 <br> F 16 B 17/00 <br><br><br><br> **CATEGORIE DES DOCUMENTS CITES** <br><br> X: particulièrement pertinent <br> A: arrière-plan technologique <br> O: divulgation non-écrite <br> P: document intercalaire <br> T: théorie ou principe à la base de l'invention <br> E: demande faisant interference <br> D: document cité dans la demande <br> L: document cité pour d'autres raisons <br><br> &: membre de la même famille, document correspondant |

X | Le présent rapport de recherche a été établi pour toutes les revendications

| Lieu de la recherche | Date d'achèvement de la recherche | Examinateur |
|---|---|---|
| Berlin | 20-11-1979 | ZAPP |

**OEB Form 1503.1   06.78**

0009002

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| | US - A - 3 375 749 (COLDREN et al.)<br>* fig. 1 *<br><br>--<br><br>US - A - 3 603 628 (SMITH et al.)<br>* fig. 3 *<br><br>--<br><br>US - A - 3 689 115 (ANDREINI et al.)<br>* fig. 3, 4 *<br><br>---- | 1<br><br><br>1<br><br><br>1 | |

DOMAINES TECHNIQUES RECHERCHES (Int. Cl.³)